# EUROPEAN PATENT APPLICATION

(11) **EP 4 574 404 A1**
(43) Date of publication of application: **25.06.2025**
(21) Application number: 23218449.9
(22) Date of filing: 20.12.2023
(51) Int. Cl.: B29C 70/52

(54) **INTEGRATED PRODUCTION LINE FOR A WIND TURBINE COMPONENT**

(71) Applicant: LM Wind Power A/S, 6000 Kolding (DK)
(72) Inventor: JØRGENSEN, Jeppe Bjørn, 6000 Kolding (DK); RAZEGHI, Rama, SO53 4SE Eastleigh (GB)
(74) Representative: COPA Copenhagen Patents

(57) **Abstract**

A production line for manufacturing a wind turbine blade component, comprising a pultrusion station comprising at least one pultrusion system each configured for pultruding the at least one pultruded part, and a mould for moulding the wind turbine blade component comprising at least one pultruded part, wherein the mould is coupled to the pultrusion station so that the mould receives the at least one pultruded part from the at least one pultrusion system.

## Description

### TECHNICAL FIELD

The present disclosure relates to an integrated production line for manufacturing a wind turbine blade component comprising at least one pultruded part. The production line couples a pultrusion station for pultruding pultruded parts with a mould for preparing the at least one pultruded part for moulding of the wind turbine blade component.

### BACKGROUND

Wind is an increasingly popular clean source of renewable energy with no air or water pollution. When the wind blows, wind turbine blades spin clockwise, capturing energy through a main shaft connected to a gearbox and a generator for producing electricity. Blades of modern wind turbines are carefully designed to maximise efficiency. Modern wind turbine blades may exceed 100 metres in length and 4 metres in width.

Wind turbine blades are typically made from a fibre-reinforced polymer material, comprising a body with a pressure side shell half and a suction side shell half, also called blade halves. The cross-sectional profile of a typical wind turbine blade includes an airfoil for creating an air flow leading to a pressure difference between both sides. The resulting lift force generates torque for producing electricity. Conventional manufacturing methods for these blades often involve the use of pultruded parts, which are composite materials comprised of reinforced fibres embedded in a polymer matrix. Pultruded parts offer advantages such as a high strength-to-weight ratio, consistent properties, and durability, making them desirable for wind turbine applications.

However, the integration of pultruded parts into wind turbine blades requires a series of pre-processing steps that can be time-consuming. The initial decoiling step involves unwinding the pultruded material from coils, presenting potential inefficiencies and material handling challenges. Subsequent processes, including peel ply removal, edge grinding, chamfering, and cleaning, prepare the pultruded parts for optimal adherence and compatibility with the blade mould.

While the use of pultruded parts in wind turbine blades has demonstrated advantages, the aforementioned pre-processing stages represent a bottleneck in the manufacturing workflow, impacting efficiency, cost-effectiveness, and overall production timelines.

### SUMMARY

On this background, it may be seen as an object of the present disclosure to provide a production line and a manufacturing method that at least alleviate or mitigate some of the above-mentioned challenges.

Another object of the present disclosure is to provide a chamfering device which can simply and efficiently chamfer end sections of pultruded parts used in the production line.

At least one of these objects may be met by aspects of the present disclosure as described in the following.

A first aspect of this disclosure relates to a production line for manufacturing a wind turbine blade component, the production line comprising a pultrusion station and a mould, preferably of a mould loading station, wherein the pultrusion station comprises at least one pultrusion system each configured for pultruding pultruded parts, wherein the mould is for moulding the wind turbine blade component comprising at least one pultruded part or pultruded parts, wherein the mould, preferably the mould loading station, is coupled to the pultrusion station so that the mould receives the at least one pultruded part from the at least one pultrusion system.

In the context of the present disclosure, a "production line" is understood as a series of distinct stations arranged to manufacture the wind turbine blade component at a specific location, such as a factory. Such a production line may also be known as an integrated production line and is generally accommodated within a single production facility, e.g. a factory. Accordingly, parts of a production line which are outsourced to other geographical locations are not understood as forming part of the integrated production line as discussed in the present disclosure.

The provision of an integrated production line allows the manufacturing of the pultruded parts and the omission of coiling of the pultruded parts. Therefore, the pultruded parts can be manufactured with untraditional cross-sections and increased thickness potentially providing a higher quality component for example with higher fibre-to-resin ratio.

Additionally or alternatively, the production line may further comprise an intermediate station coupling the pultrusion station and the mould, wherein the intermediate station comprises a receiving portion configured for receiving the at least one pultruded part from the pultrusion station and preferably is configured to convey the at least one pultruded part to the mould. An intermediate station may advantageously provide a buffer zone allowing operators to collect and prepare the pultruded parts, such as subjecting the pultruded parts to a chamfering operation, before being moved to the mould.

Additionally or alternatively, the pultrusion station may be configured to output the at least one pultruded part along a longitudinal direction, and wherein the intermediate station may be arranged as an extension in the longitudinal direction of the pultrusion station so that, when a pultruded part is manufactured from the at least one pultrusion system, the pultruded part is moved, for example due to gravity, to the receiving portion of the intermediate station. This has been found to be a particularly advantageous arrangement since a reduced effort is required to prepare the pultruded parts.

Additionally or alternatively, the intermediate station may comprise a conveying portion arranged to convey, such as by sliding, a pultruded part at the intermediate station to the mould. The pultruded part may advantageously be a chamfered pultruded part. The conveying portion may be arranged adjacent, for example transverse to the longitudinal direction (e.g. in a chordwise direction), to the receiving portion. Such a conveying portion allows operators to move prepared pultruded parts quickly and efficiently to the mould.

Additionally or alternatively, the receiving portion of the intermediate station may comprise a substantially horizontal support surface for supporting the at least one pultruded part, and/or the conveying portion may comprise a conveying surface angled towards the mould so that a pultruded part on the conveying surface is urged towards the mould due to gravity.

Additionally or alternatively, the receiving portion and/or the conveying portion may comprise rollers for supporting the pultruded part and for easing the movement of the pultruded part on the intermediate station.

Additionally or alternatively, the intermediate station may comprise a framework supporting the receiving portion and optionally the conveying portion.

Additionally or alternatively, the production line may further comprise a chamfering device for chamfering one or both end portions of at least one of the at least one pultruded part manufactured by the pultrusion station, wherein the chamfering device may be arranged at the intermediate station and/or at the mould loading section. Optionally, the chamfering device may comprise a suction device configured to be connected to a suction source and configured to remove debris produced during chamfering the end portion(s) of the at least one pultruded part. It has been found that when a chamfering device is provided at the intermediate station, the pultruded parts can be chamfered and fully prepared before being moved to the mould. On the other hand, if the chamfering device is provided at the mould, the pultruded parts can first be stacked correctly and then chamfered potentially providing a more efficient process.

Additionally or alternatively, the chamfering device may be movably arranged, such as on at least one or at least two tracks, and able to move along a longitudinal direction with respect to the pultruded part, e.g. between a root end and a tip end of the mould, so that the chamfering device can chamfer both end portions of the at least one pultruded part. Accordingly, a single chamfering device can advantageously be used to chamfer both ends of the pultruded part(s).

Additionally or alternatively, the chamfering device may include a robotic arm and a chamfering tool, such as a grinding tool, a milling tool, a sanding tool, or a cutting tool (for example blade cutting tool or laser cutting tool), mounted on the robotic arm. The robotic arm may be configured, e.g. via a plurality of actuated joints, to move the chamfering tool in at least the longitudinal, chordwise and thickness directions with respect to the at least one pultruded part. In particular, the chamfering device of the first embodiment may be arranged and be longitudinal movable on one side, preferably via a track, of the mould.

Additionally or alternatively, the chamfering device may comprise a frame and a chamfering tool, such as a grinding tool, a milling tool, a sanding tool, or a cutting tool (for example blade cutting tool or laser cutting tool), supported by the frame. The chamfering device may be configured to move the chamfering tool in two or at least two degrees of freedom with respect to the frame. For example, the chamfering tool may be able to be moved, e.g. via one, two or more actuators, in the chordwise and thickness directions. In the chordwise direction, the range of motion may encompass at least the width of the at least one pultruded part and preferably the chordwise (e.g. lateral) sides of the mould or the receiving portion of the intermediate station. The frame may extend transversely above the mould or above the receiving portion of the intermediate station.

Additionally or alternatively, the pultrusion station may be configured for pultruding pultruded parts at a predetermined overall pultrusion rate corresponding to the sum of individual pultrusion rate(s) of the at least one pultrusion system, wherein the number of pultrusion systems is determined so that, during a cycle time of the production line, the time to pultrude a number of pultruded parts required to complete the manufacturing of the wind turbine blade component corresponds or is at most a cycle time of the production line. For example, in the simplest case, where the wind turbine blade component, e.g. a spar cap, requires a single pultruded part, and the production line has a predetermined cycle time, the individual pultrusion rate of the pultrusion system is determined to ensure that a single pultruded part is completed at least at the predetermined cycle time. By setting the individual pultrusion rates correspondingly, the overall pultrusion rate ensures that the pultruded parts can be manufactured just in time for completing an overall cycle time of the factory.

Additionally or alternatively, the pultrusion station may comprise, with increasing preference, at least two, at least three, at least four, at least five, at least six, at least seven, or at least eight pultrusion systems. It may be advantageous to have multiple pultrusion systems arranged for parallel production if, for example, the wind turbine blade component requires a stack of pultruded parts with multiple pultruded parts arranged side by side in a plurality of layers. On the other hand, it may be advantageous to have a single pultrusion system, for example if the wind turbine blade component only requires a single pultruded part.

Additionally or alternatively, wherein each pultrusion system may comprise:
- a creel for receiving a plurality of bobbins each supplying a tow of fibre material;
- a resin impregnation means, such as a resin bath, configured to impregnate tows with a curable resin;
- guide plates configured to guide the tows from the creel to the resin impregnation means;
- a heated die configured to shape and at least partially cure impregnated tows into a pultrusion string;
- a pulling mechanism configured for pulling the tows through the guide plates, the resin impregnation means, and the heated die;
- a cutting device, such as a cutter, configured for cutting the pultrusion string into individual pultruded parts of a predetermined length; and
- preferably a defect detection means, such as an eddy current scanner, configured for detecting defective portions of the pultrusion string.

Additionally or alternatively, the fibre material of the pultruded parts (and thus potentially the plurality of bobbins) may comprise or consist essentially of carbon fibres, glass fibres or a combination of glass and carbon fibres.

Additionally or alternatively, the pultruded parts may comprise the fibre material embedded in an at least partly cured resin. The resin may comprise or consist essentially of at least one of polyester, epoxy, vinyl ester, or polyurethane.

Additionally or alternatively, the at least one pultruded part may have a pre-determined length of at least 50 meters, for example, with increasing preference, at least 60 meters, at least 70 meters, at least 80 meters, at least 90 meters, or at least 100 meters. Accordingly, the pultruded part(s) may be full length pultrusions ensuring that no spanwise interfaces between pultruded parts are necessary.

Additionally or alternatively, the at least one pultruded part may have a thickness of more than 5 mm, for example, with increasing preference, at least 6 mm, at least 7 mm, at least 8 mm, at least 9 mm, or at least 10 mm. Advantageously, the pultruded part(s) can be made thicker as coiling can be omitted. Accordingly, the pultruded part(s) does not need to be stacked in as many layers with a reduction in number of interfaces.

In the context of the present disclosure a "rectangular" cross-section is understood as a rectangular non-hollow cross-section which is conventionally manufactured by a pultrusion process. Additionally or alternatively, the at least one pultruded part may have a cross-section, preferably non-rectangular, such as I-beam, L-beam, Y-beam, T-beam, double L-beam, hollow cross-section, e.g. a rectangular hollow cross-section. Advantageously, the pultruded part(s) can be made with different types of cross-sections that may provide a stiffer wind turbine blade component or may perform different functions than conventional rectangular pultruded parts.

Additionally or alternatively, the pultrusion station may be configured to manufacture the at least one pultruded part partially cured with a degree of cure of at most 99%, for example with increasing preference at most 90%, at most 80%, at most 70%, at most 60% or at most 50%. Pultruding the pultruded part(s) with a partial cure allows the pultruded parts to retain some deformability and allows these to better conform to the mould. The pultruded parts may then be fully cured when the wind turbine blade component is completed.

Additionally or alternatively, the wind turbine blade component may be a spar cap and the mould may be a spar cap mould. Such a "spar cap mould" may also be referred to as an offline spar cap mould in which the primary load bearing component, i.e. the spar cap, is infused and cured separately from the shell of the wind turbine blade which provides the aerodynamic outer surface. An offline spar cap mould may provide the benefits of improving the total cycle time as fewer components need to be placed in the shell mould and provides more control over the structural parts of the blade. After curing the spar cap offline, it may be arranged in a shell mould and incorporated into a shell part of the wind turbine blade.

Alternatively, the wind turbine blade component may be a shell part, such as a suction side or pressure side shell part, and the mould may be a shell part mould. Such a "shell mould" which includes the, in this case, pultrusions may also be known as an integrated shell, load-bearing shell, or shell with an embedded or integrated spar cap. In such a mould, the shell is infused and cured together with, in this case, the individual pultrusions forming load-bearing structure of the blade. In this way, an improved control over the aerodynamic surface provided by the shell can be achieved.

Additionally or alternatively, the mould may comprise a frame and a plurality of wheels configured to allow the mould to be moved, for example to a moulding station for performing a conventional vacuum assisted resin transfer infusion moulding process.

A second aspect of this disclosure relates to a factory comprising the production line of the first aspect of this disclosure. Accommodating the full production line within a single facility provides the synergistic effects as discussed above.

A third aspect of this disclosure relates to a chamfering device for chamfering an end portion of a pultruded part, the chamfering device comprising a bed and a chamfering machine. The bed may be for supporting the end portion of the pultruded part. The bed may comprise rollers to allow the pultruded part to slide on the bed. The chamfering machine may comprise a chamfering tool, such as a rotatable chamfer drum, that may be configured for chamfering the end portion of the pultruded part preferably along a straight line inclined at a pre-determined chamfer ratio, preferably 1:100, to a pre-determined end step thickness, for example at least 0.1 mm and/or at most 0.3 mm. The predetermined chamfer ratio may be in the range of 1:10 to 1:300, preferably 1:50 to 1:150, more preferably about 1:100. The end step thickness may be in the range of 0.0 mm to 1.5 mm, preferably 0.0 mm to 1.0 mm, more preferably 0.0 mm 0.5 mm and/or may be at least 0.1 mm and/or at most 0.3 mm.

Additionally, the bed of the chamfering device may comprise an end stop for engaging an end of the pultruded part. The chamfering device may further comprise a control device configured for activating the chamfering machine when the end portion of the pultruded part engages the end stop. This provides an efficient and simple device to operate, where an operator simply pushes the pultruded part into the chamfering device and, once the pultruded part engages the end stop, the chamfering machine automatically performs the chamfer.

Additionally or alternatively, the chamfering machine may comprise guide rail including a first stop proximal to the end of the pultruded part and a second stop distal from the end of the pultruded part, wherein the chamfering tool is movable along the straight line on the guide rail between first stop and second stop of the guide rail. The chamfering tool may comprise an axle which is slidingly held by the guide rail to allow the chamfering tool to be slid along the straight line. This may be a particularly simple implementation of the chamfering device.

Additionally or alternatively, the chamfering device may comprise a first adjustment means, such as a first threaded member, that may be configured to adjust the pre-determined chamfer ratio, preferably by, upon being rotated, raising or lowering a distal portion of the guide rail.

Additionally or alternatively, the chamfering device may comprise a second adjustment means, such as a second threaded member, that may be configured to adjust the pre-determined end step thickness distance, preferably by, optionally upon being rotated, raising or lowering a proximal portion of the guide rail, preferably at the end stop of the bed.

Additionally or alternatively, the chamfering device may comprise a suction device configured to be connected to a suction source and configured to remove debris produced during chamfering the end portion of the pultruded part.

Additionally or alternatively, the chamfering device may comprise a chamber accommodating the bed, the chamfering machine, and preferably the suction device, wherein the chamber is configured to contain debris produced during chamfering the end portion of the pultruded part.

A fourth aspect of this disclosure relates to a method of manufacturing a wind turbine blade component preferably in a factory according to the second aspect of this disclosure, the method comprising the steps of:
- providing a production line according to the first aspect of this disclosure;
- pultruding at least one pultruded part using the pultrusion station;
- preferably conveying the at least one pultruded part to the mould, preferably of the mould loading station;
- preferably loading the at least one pultruded part into the mould, preferably of the mould loading station; and
- moulding, preferably by a resin infusion process, the wind turbine blade component in the mould at a moulding station of the production line so that the wind turbine blade component comprises the at least one pultruded part and/or so that the at least one pultruded part is embedded within the wind turbine blade component.

Additionally or alternatively, the method may further comprise chamfering one or both end portions of the at least one pultruded part using the chamfering device optionally according to the third aspect of this disclosure, and, preferably, the step of loading the at least one pultruded part into the mould involves loading the at least one chamfered, pultruded part into the mould.

Additionally or alternatively, the step of pultruding at least one pultruded part using the pultrusion station may comprise simultaneously pultruding two or more pultruded parts using the pultrusion station.

Additionally or alternatively, the step of simultaneously pultruding two or more pultruded parts using the pultrusion station may comprise asynchronously completing the pultrusion of the two or more pultruded parts.

Additionally or alternatively, the method may further comprise the steps of:
- finish pultruding a first pultruded part by a first pultrusion system of the pultrusion station;
- chamfering one or both end portions of the first pultruded part;
- finish pultruding a second pultruded part by a second pultrusion system (which is different from the first) of the pultrusion station subsequent to the first pultruded part, wherein the pultrusion of the second pultruded part finishes after completion of the chamfering of one or both end portions of the first pultruded part; and
- chamfering one or both end portions of the second pultruded part.

In the context of this disclosure, an element in relation to the pultruded part is considered "proximal" when being closer to the end of the pultruded part, or the intended location of the end of the pultruded part, e.g. at the end stop of the bed, compared to another more distal element. For example, the guide rail is inclined towards the end of the pultruded part and thus the end of the guide rail near the end of the pultruded part is the "proximal" end while the opposite end is the "distal" end.

In the context of this disclosure, the directions referred to as "longitudinal", "chordwise", or "thickness" of an element refer to the directions of that element when associated with a wind turbine blade. For example, a "spar cap" will extend along these directions when incorporated into a wind turbine blade where the longitudinal direction is also sometimes referred to as the spanwise direction, the chordwise direction extends between the leading and trailing edges of the wind turbine blade and the thickness direction generally extends between the thickest points of the wind turbine blade.

A chamfer ratio in the context of the present disclosure may be provided as two numbers corresponding to a thickness decrease per length unit, such as 1:100 which represents a chamfer that decreases one unit of thickness for every hundred units of length.

The following is a list of exemplary items:
1. A method of manufacturing a wind turbine blade component preferably in a factory according to item 31, the method comprising the steps of:
   - providing a production line preferably according to any one of items 6-30;
   - pultruding at least one pultruded part using a pultrusion station of the production line;
   - preferably conveying the at least one pultruded part to a mould loading station of the production line;
   - preferably loading the at least one pultruded part into a mould of the mould loading station; and
   - moulding, preferably by a resin infusion process, the wind turbine blade component in the mould at a moulding station of the production line so that the wind turbine blade component comprises the at least one pultruded part and/or so that the at least one pultruded part is embedded within the wind turbine blade component.
2. A method according to the previous item further comprising chamfering one or both end portions of the at least one pultruded part preferably using the chamfering device optionally according to any one of items 32-40, and wherein, preferably, the step of loading the at least one pultruded part into the mould involves loading the at least one chamfered, pultruded part into the mould.
3. A method according to any one of the previous items, wherein the step of pultruding at least one pultruded part using the pultrusion station comprises simultaneously pultruding at least two pultruded parts using a first pultrusion system and a second pultrusion system of the pultrusion station.
4. A method according to any one of the previous items, wherein the step of simultaneously pultruding two or more pultruded parts using the pultrusion station comprises asynchronously completing the pultrusion of the two or more pultruded parts.
5. A method according to any one of the previous items further comprising the steps of:
   - finish pultruding a first pultruded part by a first pultrusion system of the pultrusion station;
   - chamfering one or both end portions of the first pultruded part preferably using the chamfering device;
   - finish pultruding a second pultruded part by a second pultrusion system of the pultrusion station subsequent to the first pultruded part; and
   - chamfering one or both end portions of the second pultruded part preferably using the chamfering device.
6. A production line for manufacturing a wind turbine blade component comprising at least one pultruded part, comprising:
   - A pultrusion station comprising at least one pultrusion system each configured for pultruding the at least one pultruded part; and
   - a mould, preferably of a mould loading station, for moulding the wind turbine blade component comprising the at least one pultruded part;
   wherein the mould is coupled to the pultrusion station so that the mould receives the at least one pultruded part from the at least one pultrusion system.
7. A production line according to item 6, comprising an intermediate station coupling the pultrusion station and the mould, wherein the intermediate station comprises a receiving portion configured for receiving the pultruded parts from the pultrusion station and preferably is configured to convey the pultruded parts to the mould.
8. A production line according to any one of items 6-7, wherein the pultrusion station is configured to output the pultruded parts along a longitudinal direction, and wherein the intermediate station is arranged as an extension in the longitudinal direction of the pultrusion station so that, when a pultruded part is manufactured from the at least one pultrusion system, the pultruded part is moved, for example due to gravity, to the receiving portion of the intermediate station.
9. A production line according to any one of items 6-8, wherein the intermediate station comprises a conveying portion arranged to convey, such as by sliding, a pultruded part at the intermediate station to the mould.
10. A production line according to any one of items 6-9, wherein the conveying portion is arranged adjacent, for example transverse to the longitudinal direction, to the receiving portion.
11. A production line according to any one of items 6-10, wherein the receiving portion comprises a substantially horizontal support surface for supporting the pultruded parts and/or the conveying portion comprises a conveying surface angled towards the mould so that a pultruded part on the conveying surface is urged towards the mould due to gravity.
12. A production line according to any one of items 6-11, wherein the intermediate station comprises a framework supporting the receiving portion and optionally the conveying portion.
13. A production line according to any one of items 6-12 comprising a chamfering device, optionally according to any one of items 32-40, for chamfering one or both end portions of the pultruded parts manufactured by the pultrusion station, wherein the chamfering device is preferably arranged at the mould loading section and/or at the intermediate station.
14. A production line according to any one of item 13, wherein the chamfering device comprises a suction device configured to be connected to a suction source and configured to remove debris producing during chamfering the end portion(s) of the pultruded parts.
15. A production line according to any one of items 13-14, wherein the chamfering device is movably arranged, such as on at least one or at least two tracks, and able to move along a longitudinal direction with respect to the at least one pultruded part so that the chamfering device can chamfer both end portions of the at least one pultruded part.
16. A production line according to any one of items 13-15, wherein the chamfering device comprises a robotic arm and chamfering tool, such as a grinding tool, a milling tool, a sanding tool, or a cutting tool (for example blade cutting tool or laser cutting tool), mounted on the robotic arm.
17. A production line according to item 16, wherein the robotic arm is configured to, for example via a plurality of actuated joints, to move the chamfering tool in the longitudinal, chordwise and thickness directions with respect to the at least one pultruded part.
18. A production line according to any one of items 13-15, wherein the chamfering device comprises a frame and a chamfering tool, such as a grinding tool, a milling tool, a sanding tool, or a cutting tool (for example blade cutting tool or laser cutting tool), supported by the frame, wherein, preferably the frame extends transversely above the mould or above the receiving portion of the intermediate station.
19. A production line according to item 18, wherein the chamfering device is configured to move the chamfering tool in two or at least two degrees of freedom with respect to the frame.
20. A production line according to any one of items 6-19, wherein the pultrusion station is configured for manufacturing pultruded parts at a predetermined pultrusion station rate corresponding to the sum of pultrusion system rate of at least one pultrusion system, wherein the number of pultrusion systems is determined so that the pultrusion station rate corresponds to a cycle time of the production line.
21. A production line according to any one of items 6-20, wherein the pultrusion station comprises, with increasing preference, at least two, at least three, at least four, at least five, at least six, at least seven, or at least eight pultrusion systems.
22. A production line according to any one of items 6-21, wherein each pultrusion system comprises:
   - a creel for receiving a plurality of bobbins each supplying a tow of fibre material;
   - a resin impregnation means, such as a resin bath, configured to impregnate tows with a curable resin;
   - guide plates configured to guide the tows from the creel to the resin impregnation means;
   - a heated die configured to shape and at least partially cure impregnated tows into a pultrusion string;
   - a pulling mechanism configured for pulling the tows through the guide plates, the resin impregnation means, and the heated die;
   - a cutter configured for cutting the pultrusion string into individual pultruded parts of a pre-determined length; and
   - preferably a defect detection means, such as an eddy current scanner, configured for detecting defective portions of the pultrusion string.
23. A production line according to any one of items 6-22, wherein the fibre material of the plurality of bobbins comprises or consists essentially of carbon fibres, glass fibres or a combination of glass and carbon fibres.
24. A production line according to any one of items 6-23, wherein the at least one pultruded part has a pre-determined length of at least 50 meters, for example, with increasing preference, at least 60 meters, at least 70 meters, at least 80 meters, at least 90 meters, or at least 100 meters.
25. A production line according to any one of items 6-24, wherein the at least one pultruded part has a thickness of more than 5 mm, for example, with increasing preference, at least 6 mm, at least 7 mm, at least 8 mm, at least 9 mm, or at least 10 mm.
26. A production line according to any one of items 6-25, wherein the at least one pultruded part has a cross-section, preferably non-rectangular cross-section, such as an I-beam cross-section, a L-beam cross-section, a Y-beam cross-section, a T-beam cross-section, a double L-beam cross-section, or a hollow cross-section, e.g. a rectangular hollow cross-section.
27. A production line according to any one of items 6-26, wherein the pultrusion station is configured to manufacture the at least one pultruded part partially cured with a degree of cure of at most 99%, for example with increasing preference at most 90%, at most 80%, at most 70%, at most 60% or at most 50%.
28. A production line according to any one of items 6-27, wherein the wind turbine blade component is a spar cap and the mould is a spar cap mould.
29. A production line according to any one of items 6-28, wherein the wind turbine blade component is a shell part, such as a suction side or pressure side shell part, and the mould is a shell part mould.
30. A production line according to any one of items 6-29, wherein the mould comprises a frame and a plurality of wheels configured to allow the mould to be moved, for example to a moulding station.
31. A factory comprising the production line according to any one of items 6-30.
32. A chamfering device for chamfering an end portion of a pultruded part, the chamfering device comprising:
   - a bed for supporting the end portion of the pultruded part; and
   - a chamfering machine comprising a chamfering tool, such as a rotatable chamfer drum, configured for chamfering the end portion of the pultruded part along a straight line inclined at a pre-determined chamfer ratio, preferably 1:100, to a pre-determined end step thickness, for example at least 0.1 mm and/or at most 0.3 mm.
33. A chamfering device according to item 32, wherein the bed of the chamfering device comprises an end stop for engaging an end of the pultruded part.
34. A chamfering device according to any one of items 32-33, wherein the chamfering device comprises a control device configured for activating the chamfering machine when the end portion of the pultruded part engages the end stop.
35. A chamfering device according to any one of items 32-34, wherein the chamfering machine comprises a guide rail including a first stop proximal to the end of the pultruded part and a second stop distal from the end of the pultruded part, wherein the chamfering tool is movable along the straight line on the guide rail between stops of the guide rail.
36. A chamfering device according to any one of items 32-35, wherein the chamfering tool comprises an axle which is slidingly held by the guide rail to allow the chamfering tool to be slid along the straight line.
37. A chamfering device according to any one of items 32-36 comprising a first adjustment means, such as a first threaded member, configured to adjust the pre-determined chamfer ratio, preferably by, upon being rotated, raising or lowering a distal portion of the guide rail.
38. A chamfering device according to any one of items 32-37 comprising a second adjustment means, such as a second threaded member, configured to adjust the pre-determined end step thickness distance, preferably by, optionally upon being rotated, raising or lowering a proximal portion of the guide rail, preferably at the end stop of the bed.
39. A chamfering device according to any one of items 32-38, wherein the chamfering device comprises a suction device configured to be connected to a suction source and configured to remove debris produced during chamfering the end portion of the pultruded part.
40. A chamfering device according to any one of items 32-39, wherein the chamfering device comprises a chamber accommodating the bed, the chamfering machine, and preferably the suction device, wherein the chamber is configured to contain debris produced during chamfering the end portion of the pultruded part.

A person skilled in the art will appreciate that at least one of the above aspects of this disclosure and embodiments thereof may be combined with at least one of the other aspects of this disclosure and embodiments thereof.

### BRIEF DESCRIPTION OF THE DRAWINGS

Embodiments of this disclosure will be described in more detail in the following with regard to the accompanying figures. The figures show one way of implementing the present invention and are not to be construed as being limiting to other possible embodiments falling within the scope of the attached claim set.
Fig. 1 is a schematic perspective view of a wind turbine.
Fig. 2 is a schematic perspective view of a wind turbine blade for a wind turbine as shown in Fig. 1.
Fig. 3 is a schematic top view of a production line according to the present disclosure for manufacturing a wind turbine blade component.
Fig. 4 is a schematic top view of a pultrusion station of the production line of Fig. 3.
Fig. 5 is a schematic perspective view of a pultrusion system of the pultrusion station of Fig. 4.
Figs. 6A-E show schematic cross-sectional views of a pultruded part manufactured by the production line of Fig. 5.
Fig. 7 is a schematic cross-sectional view of the coupling between an intermediate station and a mould loading station of the production line of Fig. 3.
Fig. 8A-B show schematic cross-sectional view of the wind turbine blade comprising spar caps including pultruded parts according to this disclosure.
Fig. 9 is a schematic cross-sectional view of a chamfering device for use in the production line of Fig. 3.
Figs. 10A-B are schematic perspective views of different chamfering devices according to the present disclosure.
Figs. 11A-B are schematic perspective view of different chamfering devices according to the present disclosure.

### DETAILED DESCRIPTION

In the following figure description, the same reference numbers refer to the same or corresponding elements and may thus not be described in relation to all figures.

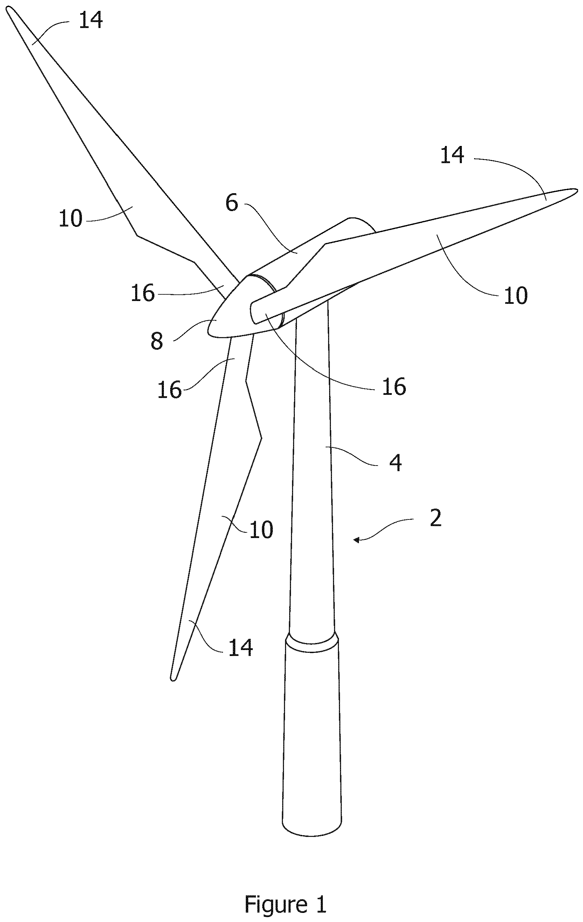

Fig. 1 illustrates a conventional modern upwind wind turbine 2 according to the so-called "Danish concept" with a tower 4, a nacelle 6 and a rotor with a substantially horizontal rotor shaft which may include a tilt angle of a few degrees. The rotor includes a hub 8 and three blades 10 extending radially from the hub 8, each having a blade root 16 nearest the hub and a blade tip 14 furthest from the hub 8.

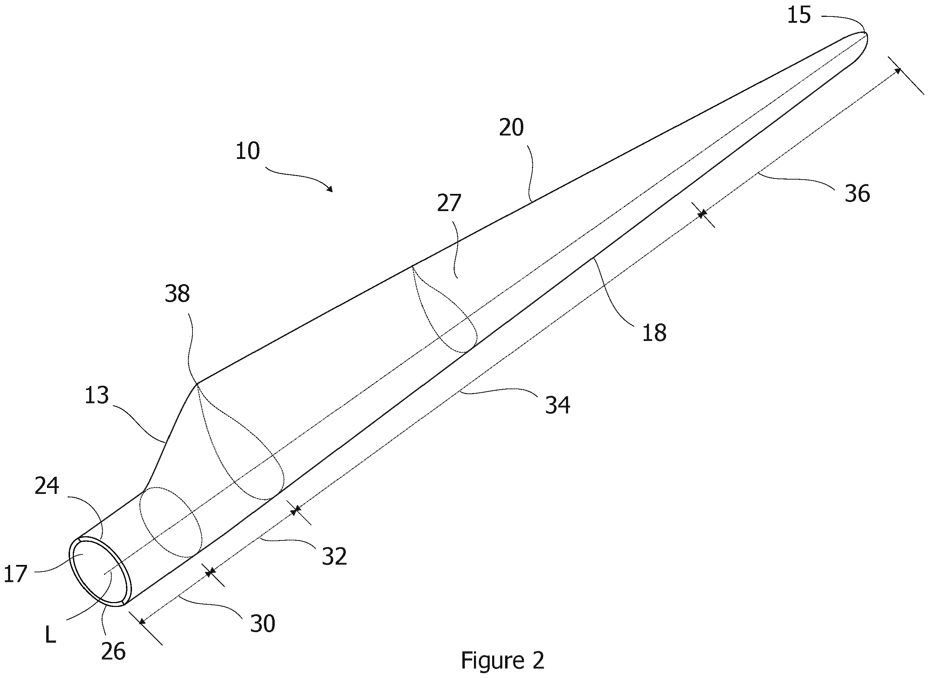

Fig. 2 shows a schematic view of an exemplary wind turbine blade 10. The wind turbine blade 10 has the shape of a conventional wind turbine blade with a root end 17 and a tip end 15 and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub 8, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root region 30. The transition region 32 has a transitional profile gradually changing from the circular or elliptical shape of the root region 30 to the airfoil profile of the airfoil region 34. The chord length of the transition region 32 typically increases with increasing distance r from the hub. The airfoil region 34 has an airfoil profile with a chord extending between the leading edge 18 and the trailing edge 20 of the blade 10. The width of the chord decreases with increasing distance r from the hub. A shoulder 38 of the blade 10 is defined as the position, where the blade 10 has its largest chord length. The shoulder 38 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

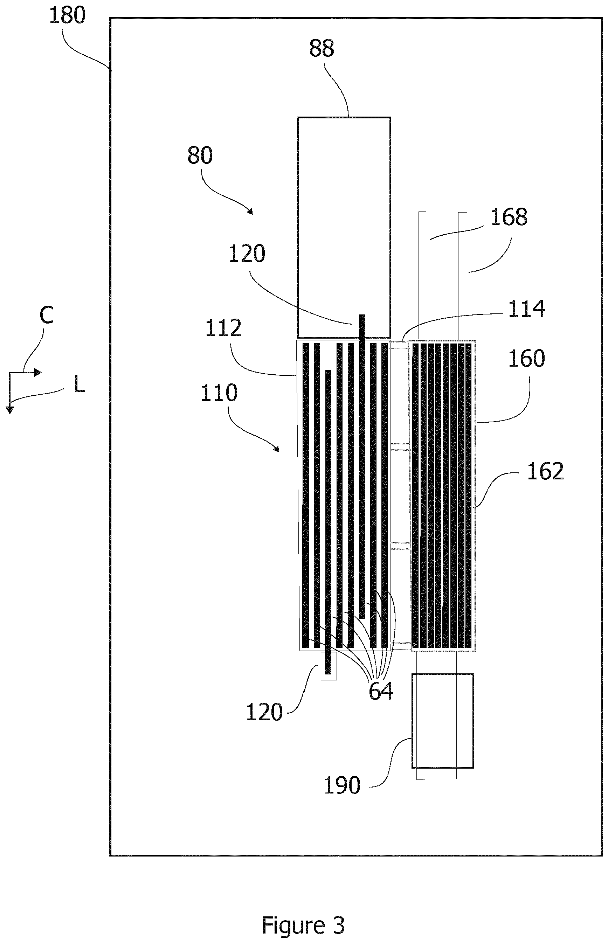

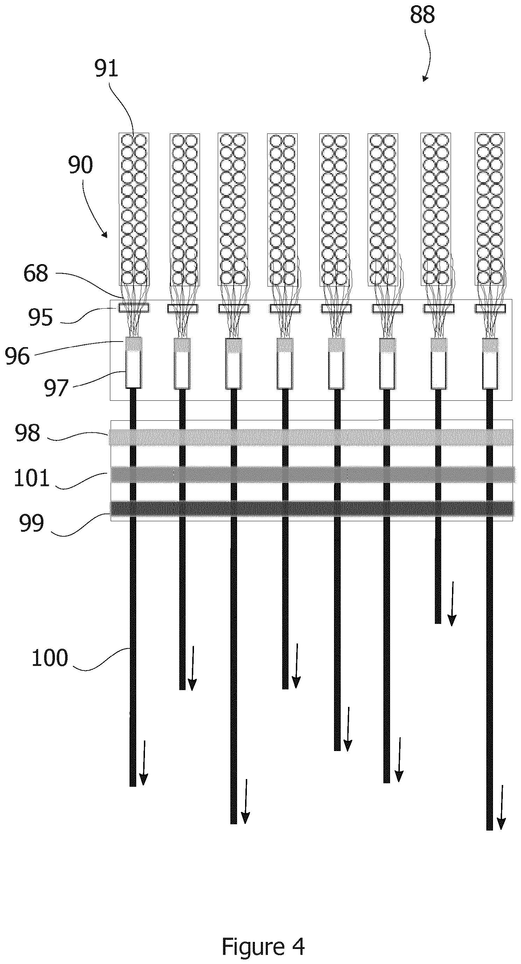

Turning now to Fig. 3, a production line 80 for manufacturing a wind turbine blade component is shown. The production line 80 comprising a pultrusion station 88 (which is shown in greater detail on Fig. 4), an optional intermediate station 110, a mould 162 (optionally of a mould loading station 160), an optional moulding station 190. Accordingly, the production line 80 is a series of distinct stations integrated to manufacture the wind turbine blade component within a factory 180. The mould 162 is for moulding the wind turbine blade component. As shown in Fig. 3, the mould 162 is coupled to the pultrusion station 88 so that the mould 162 receives the pultruded parts 64 from the at least one pultrusion system.

The pultrusion station 88 comprises at least one pultrusion system 90 each configured for manufacturing a pultrusion string 100 which is cut into pultruded parts 64. As shown in Fig. 4, the pultrusion system 90 can comprise eight pultrusion systems 90 although this number of pultrusion systems 90 will vary depending on the particular wind turbine blade component and the number of pultruded parts 64 required therein. The pultrusion station 88 manufactures the pultruded parts 64 at a predetermined overall pultrusion rate corresponding to the sum of individual pultrusion rates of the eight pultrusion systems 90. The number of pultrusion systems 90 is determined so that, during a cycle time of the production line, the time to manufacture a number of pultruded parts 64 required to complete the manufacturing of the wind turbine blade component corresponds or is at most a cycle time of the production line. For example, in the simplest case, where the wind turbine blade component, e.g. a spar cap, requires a single pultruded part 64, and the production line has a predetermined cycle time, the individual pultrusion rate of the pultrusion system 90 is determined to ensure that a single pultruded part 64 is completed at least at the predetermined cycle time.

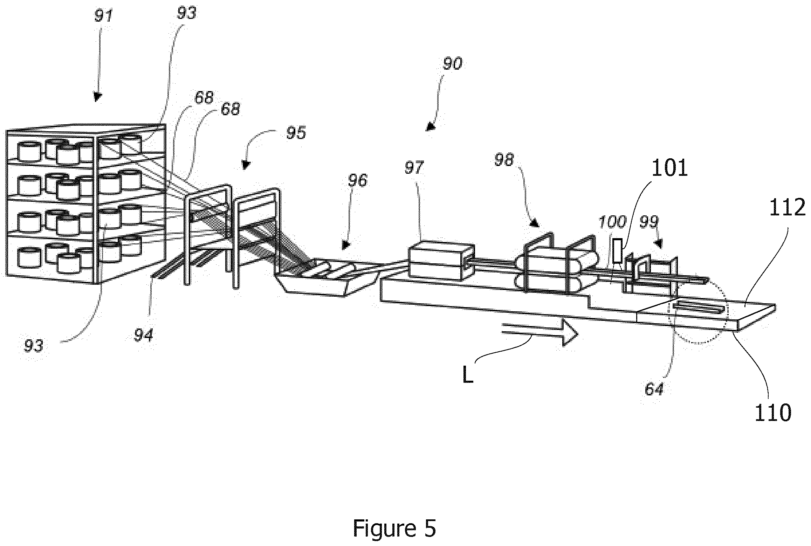

Fig. 5 illustrates such a pultrusion system 90 performing a pultrusion process. The pultrusion system 90 comprises a creel 91 for receiving a plurality of bobbins 93 each supplying a tow of fibre material 68, such as carbon fibres. An additional reinforcement material 94 can be provided as well. The tows 68 are pulled through guide plates 95, resin bath 96, and heated die 97 by a pulling mechanism 98. The shaped impregnated fibres are at least partly (e.g. between 60%-70% cured) or fully cured. The pultrusion string 100 is cut into individual pultrusion parts 64 by a cutter 99 onto the intermediate station 110. Accordingly, the intermediate station 110 is coupled to the pultrusion station 88. The pultruded part 64 thus has a pre-determined length of at least 50 meters. For the longest state of the art wind turbine blades 10, the pre-determined length can be more than 100 meters. The guide plates and/or the die may take the form of a spreader or inlet comprising multiple apertures, each aperture receiving a respective carbon fibre tow or glass fibre tow. The apertures can be spaced, and they are located so as to guide the fibre tows, for example to form a desired pattern. A defect detection means 101 in the form of an eddy current scanner is arranged between the heated die 97 and the cutter 99. The defect detection means 101 detects defective portions of the pultrusion string 100 and feeds this information to the cutter which can then proceed to cut defective parts of the pultrusion string 100 out. The pultrusion system 90 is, in principle, configured to run continuously, only stopping for maintenance.

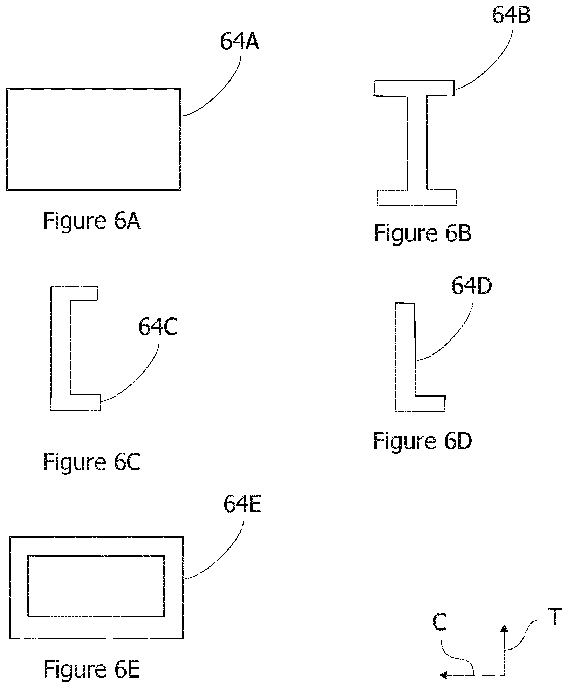

Turning to Fig. 6A-6E, exemplary cross-sections 64A, 64B, 64C, 64C, 64D, 64E for the pultruded parts 64 are shown. An advantage of providing an integrated production line according to the present disclosure is that coiling of the pultruded parts 64 can be omitted. Accordingly, the cross-section is not restricted to the conventional rectangular cross-section 64A shown in Fig. 6A, which is particularly suitable for coiling but allows more variations in the cross-sectional design. For example, the cross-section can be an I-beam cross-section 64B as in Fig. 6B, a double L-beam cross-section 64C as in Fig. 6C, a single L-beam cross-section 64D as in Fig. 6D, or a hollow rectangular cross-section 64E as in Fig. 6E. Other cross-sectional shapes can further be developed subject to the limitations of the pultrusion process.

Another advantage due to the omission of coiling is that the pultruded part can have an increased thickness. The thickness generally being the shortest dimension compared to the length and width of the pultruded part. In order to coil a pultruded part 64, the thickness thereof must be rather thin, often not exceeding 5 mm. However, the production line according to the present disclosure allows for inclusion of thicker pultruded parts 64 in the wind turbine blade component as the pultruded parts 64 do not have to be designed for being coiled. The thickness can for example be more than 5 mm or even more than 10 mm. In some cases, the pultrusion thickness can be up to 100 mm.

As best seen in Figs. 3 and 5, the pultrusion station 88 outputs the pultruded parts 64 along the longitudinal direction L and the intermediate station 110 is arranged as an extension in the longitudinal direction L of the pultrusion station 88 so that, when a pultruded part 64 is manufactured from the at least one pultrusion system 90, the pultruded part 64 is moved, for example due to gravity, to the receiving portion 112 of the intermediate station 110.

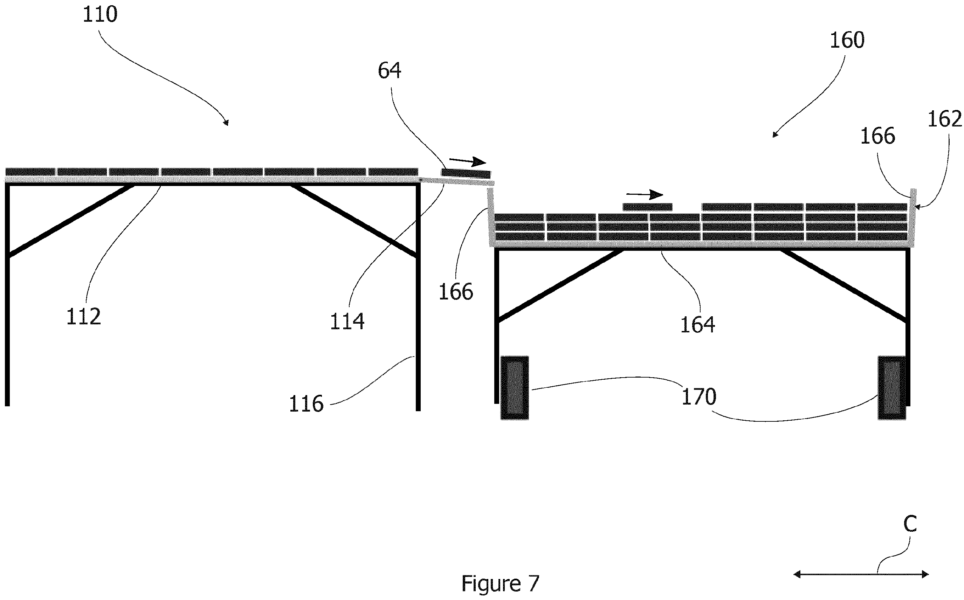

Turning to Fig. 7, the intermediate station 110 comprises a framework 116 supporting the receiving portion 112 and a conveying portion 114. The receiving portion 112 defines a substantially horizontal support surface for supporting the pultruded parts 64. The conveying portion 114 is for conveying the pultruded parts 64 to the mould 162 of the mould loading station 160. The conveying portion 114 is arranged adjacent and transverse to the longitudinal direction (e.g. in a chordwise direction C), to the receiving portion 112. As shown in Fig. 7, the conveying portion 114 defines a conveying surface (e.g. with a low friction coating) which is angled towards the mould 112 of the mould loading station 160 so when a pultruded part 64 is slid onto, e.g. by an operator or robotic means, on the conveying surface, the pultruded part 64 is urged towards the mould due to gravity. The conveying portion 114 may be connected to the receiving portion 112 via a hinge to allow adjustment of the angle thereof relative to the mould 162.

The mould 162 of the mould loading station comprises a moulding surface 164 supporting a plurality of pultruded parts 64. In this case, the pultruded parts 64 are stacked to eight pultruded parts 64 wide and four pultruded parts 64 high. This stacked arrangement can vary depending on the requirements of the wind turbine blade component moulded in the mould 162. The mould 162 comprises lateral mould sides 166 extending upright from the moulding surface 164 to retain the pultruded parts 64 within the mould 162. The mould 162 comprises wheels 170 running on line 168 as shown in Fig. 3. This allows the mould 162 to be easily moved on to a moulding station 190 when the required number of pultruded parts 64 have been arranged in the mould 162.

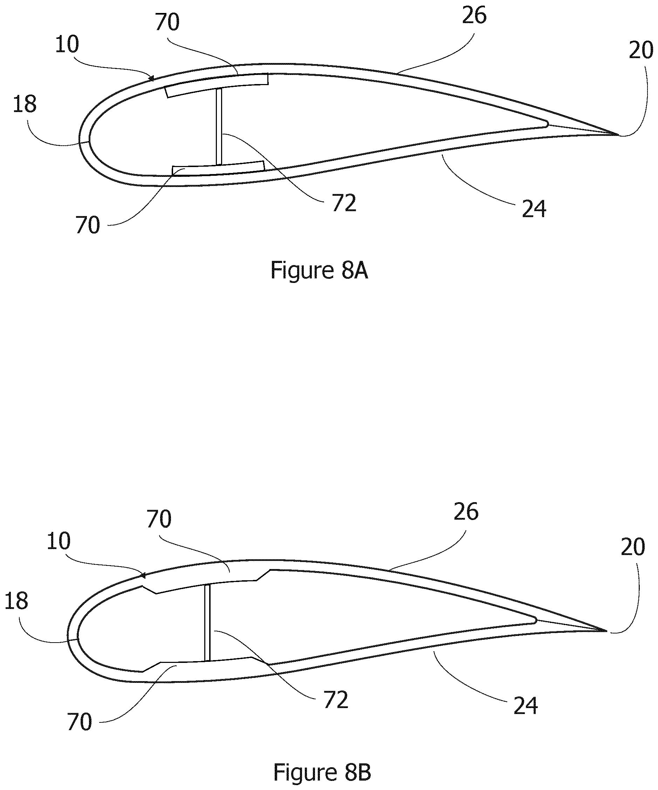

Turning to Figs. 8A-8B, the wind turbine blade component is a spar cap 70 and the mould may be an offline spar cap mould 162. At the moulding station 190, the pultruded parts 64 in the mould 162 are infused with a resin under a vacuum pressure and subsequently cured into a separate spar cap component. Such a separate spar cap may be known as an offline spar cap since it is made separately from the shell mould. This spar cap component, for example as a separate spar beam, can then be adhered to an already cured shell part 24, 26 to arrive at the arrangement shown in Fig. 8A. Alternatively, the pre-cured spar cap 70 can be placed in a shell mould on one or more outer shell layers, and possibly covered by one or more inner shell layers, and then infused and cured in a second resin transfer infusion process to arrive at the arrangement shown in Fig. 8B.

In an alternative arrangement, the wind turbine blade component can be a shell part, such as a pressure side shell part 24, or suction side shell part 26. Accordingly, the mould 162 would either allow the pultruded parts 64 to be correctly stacked before being moved to a shell part mould (not shown), or alternatively, the mould 162 would be a shell part mould (not shown). Such a "shell mould" which includes the, in this case, pultrusions may also be known as an integrated shell, load-bearing shell, or shell with an embedded or integrated spar cap. In such a mould, the shell is infused and cured together with, in this case, the individual pultrusions forming load-bearing structure of the blade.

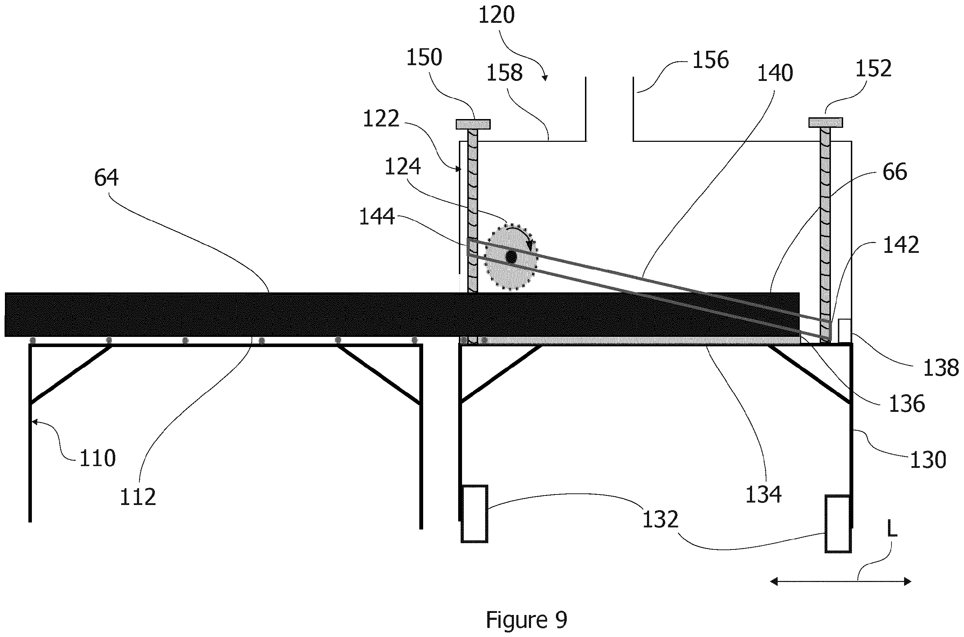

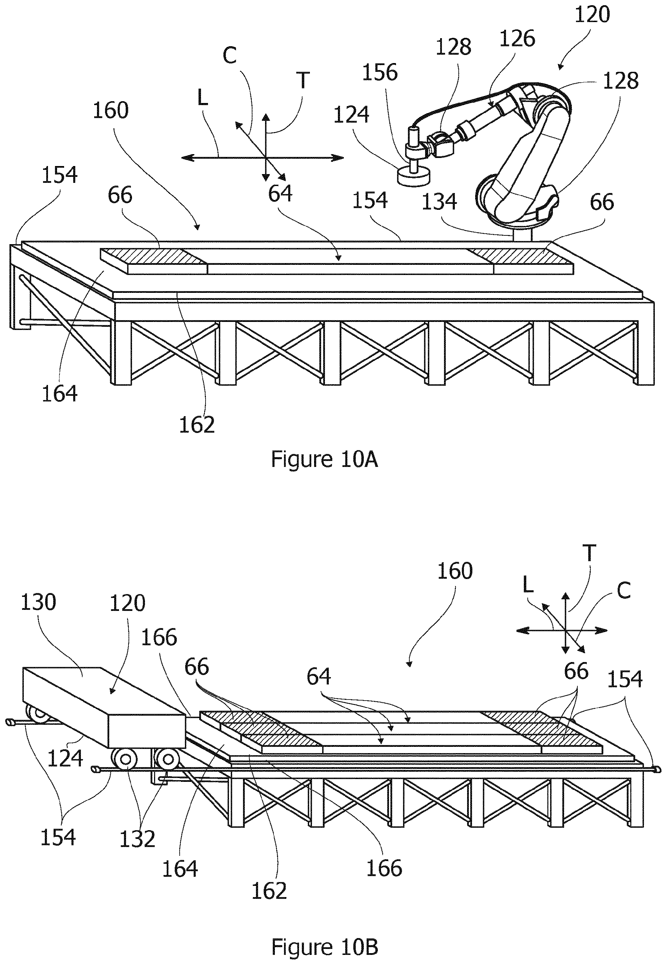

Before the wind turbine blade component is moulded with the pultruded parts 64, e.g. embedded, it is often necessary to chamfer the end portions 66 of the pultruded parts 64. For this purpose and as shown in Figs. 9 and 10A-B, the production line 80 is provided with a chamfering device 120 for chamfering one or both end portions 66 of each pultruded part 64 manufactured by the pultrusion station 88. The chamfering device 120 comprises a suction device 156 connected to a suction source and configured to remove debris produced during chamfering the end portion(s) of the pultruded parts 64. The chamfering device 120 may either be provided as a stand-alone device or integrated and arranged at either the intermediate station 110 (see Fig. 9) or the mould loading station 160 (see Figs. 10A-C).

Turning to Fig. 9, the chamfering device 120 is shown comprising a bed 134 and a chamfering machine 122. The bed 134 supports the end portion 66 of a pultruded part 64 arranged thereon. The bed 134 comprises an end stop 136 for engaging an end of the pultruded part 64. The chamfering device 120 comprises a control device 138 which activates the chamfering machine 122 when the end portion 66 of the pultruded part 64 engages the end stop 136.

The chamfering machine 122 comprises a rotatable and motorised chamfering tool 124 in the form of a chamfering drum. The chamfering tool 124 has an axle which is held by a guide rail 140. The guide rail 140 has a first stop 142 proximal to the end of the pultruded part 64 and a second stop 144 distal from the end of the pultruded part 64 and the rotatable chamfering tool 124 is movable along a straight line on the guide rail 140 between first stop 142 and second stop 144. The straight line is inclined at an adjustable pre-determined chamfer ratio, for example set at 1:100, to a pre-determined end step thickness, for example at least 0.1 mm and/or at most 0.3 mm. The chamfering device 120 also comprises a first adjustment means 150 in the form of a first threaded member which can, upon being rotated, raise or lower the second stop 144 of the guide rail 140 and thereby adjust the pre-determined chamfer ratio. Further, the chamfering device 120 comprises a second adjustment means 152 in the form of a second threaded member which can, upon being rotated, raise or lower the first stop 142 of the guide rail 140 thereby adjusting the pre-determined end step thickness distance. Accordingly, the pre-determined chamfer ratio and the pre-determined end step thickness can be adjusted to suit the specific process requirements.

The chamfering device 120 also comprises a chamber 158 accommodating the bed 134 and the chamfering machine 122. The chamber 158 prevents debris produced during chamfering the end portion 66 of the pultruded part 64 from escaping. The suction device 156 is connected to the chamber 158 and thus removes the debris accumulating within the chamber 158.

Turning to Figs. 10A-B, the chamfering device 120 is movably arranged on one track 154 (see Fig. 10A) or on two tracks 154 (see Fig. 10B) of the mould loading station 160. The chamfering device 120 is thus able to move along the longitudinal direction L with respect to the pultruded part 64 between the root end and the tip end of the mould 162, so that the chamfering device 120 can chamfer both end portions of the pultruded part 64 (see Fig. 10A) or plurality of pultruded parts 64 (see Fig. 10B).

Turning to Fig. 10A, the chamfering device 120 includes a robotic arm 126 and a chamfering tool 124 mounted on the robotic arm 126. In the present example, the chamfering tool is a milling tool but may also be a grinding tool, a sanding tool, or a cutting tool (for example blade cutting tool or laser cutting tool). The robotic arm is configured via a plurality of actuated joints 128 to move the chamfering tool 124 in the longitudinal L, chordwise C and thickness directions T with respect to the at least one pultruded part 64. In addition, the chamfering device 120 is also arranged and is longitudinally movable on one side via the track 156 of the mould 162 of the mould loading station 160. Alternatively, this chamfering device 120 may be included as part of the intermediate station 110 as indicated on Fig. 3.

Turning to Fig. 10B, the chamfering device 120 comprises a frame 130 and a chamfering tool 124 (not shown but present beneath the chamfering device 120) supported by the frame 130. In the present example, the chamfering tool 124 is a grinding tool but may also be a milling tool, a sanding tool, or a cutting tool (for example blade cutting tool or laser cutting tool). The chamfering device 120 can move the chamfering tool 124 via actuators in the chordwise direction C and thickness direction T. In the chordwise direction C, the range of motion encompasses the width of the pultruded parts 64 and the lateral sides 166 of the mould 162 of the mould loading station 160. The frame 130 transversely above the mould of the mould loading station 160 with wheels 132 on each side of the mould 162 running on the tracks 154. Alternatively, this chamfering device 120 may be included as part of the intermediate station 110 as indicated on Fig. 3.

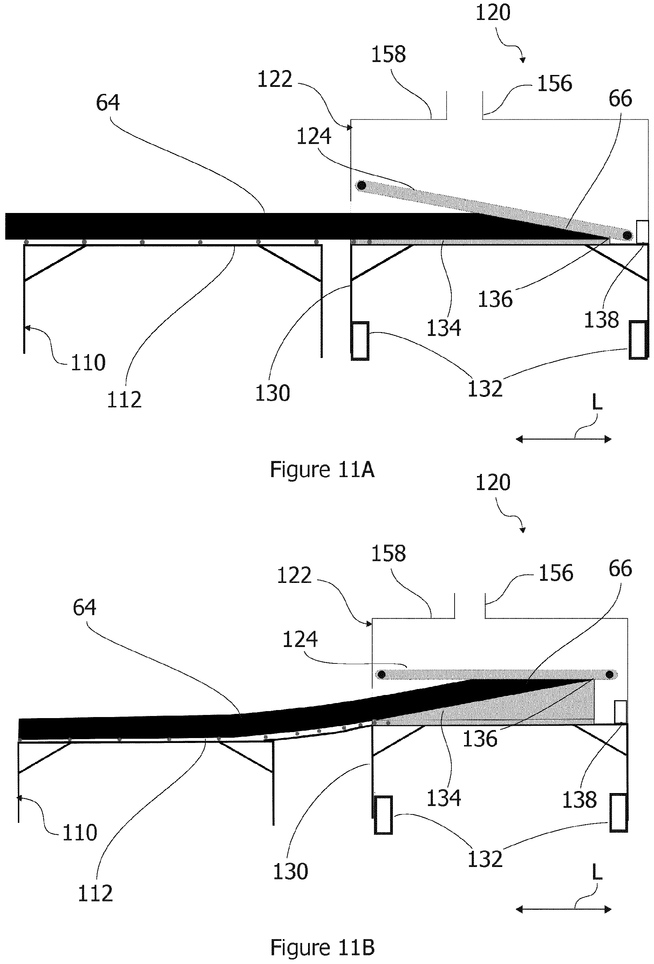

In Figs. 11A-B further variants of the chamfering device of Fig. 9 are shown. In Fig. 11A, the chamfering tool 124 is a belt sanding tool arranged at an incline with respect to horizontal. The incline defines the pre-determined chamfer ratio. Otherwise, the other features of Fig. 9 apply to this variant. For example, the chamfering device 122 of Fig. 11A may also comprise the first and second adjustment means as shown in Fig. 9 arranged to raise or lower the end points of the chamfering tool 124 according to the same principle as in Fig. 9. In Fig. 11B, the chamfering tool 124 is also a belt sanding tool. However, in this variant the bed 134 of the chamfering device 122 is arranged at an incline corresponding to the predetermined chamfering ratio while the chamfering tool 124 is arranged horizontally. Accordingly, the chamfering tool 124 can thus remove material until the end portion 66 of the pultruded part 64 engages the end stop 136. In both Figs. 11A-B, the chamfering device 122 may be configured to activate, e.g. via the control device 138, the chamfering tool 124 when the end portion 66 of the pultruded part enters the chamber 158.

### LIST OF REFERENCES

| | | | |
|---|---|---|---|
| 2 | wind turbine | 101 | defect detection means |
| 4 | tower | 110 | intermediate station |
| 6 | nacelle | 112 | receiving portion |
| 8 | hub | 114 | conveying portion |
| 10 | blade | 116 | framework |
| 13 | shell | 120 | chamfering device |
| 14 | blade tip | 122 | chamfering machine |
| 15 | tip end | 124 | chamfering tool |
| 16 | blade root | 126 | robotic arm |
| 17 | root end | 128 | actuated joint |
| 18 | leading edge | 130 | frame |
| 20 | trailing edge | 132 | wheel |
| 24 | pressure side shell part | 134 | bed |
| 26 | suction side shell part | 136 | end stop |
| 27 | exterior blade surface | 138 | control device |
| 30 | root region | 140 | guide rail |
| 32 | transition region | 142 | first stop |
| 34 | airfoil region | 144 | second stop |
| 36 | tip region | 146 | proximal portion |
| 38 | shoulder | 148 | distal portion |
| 64 | pultruded part | 150 | first adjustment means |
| 66 | end portion | 152 | second adjustment means |
| 68 | tows | 154 | track |
| 70 | spar cap | 156 | suction device |
| 72 | shear web | 158 | chamber |
| 80 | production line | 160 | mould loading station |
| 88 | pultrusion station | 162 | mould |
| 90 | pultrusion system | 164 | moulding surface |
| 91 | creel | 166 | lateral mould sides |
| 93 | bobbins | 168 | line |
| 94 | reinforcement material | 170 | wheel |
| 95 | guide plates | 180 | factory |
| 96 | resin impregnation means | 190 | moulding station |
| 97 | heated die | L | longitudinal direction |
| 98 | pulling mechanism | C | chordwise direction |
| 99 | cutter | T | thickness direction |
| 100 | pultrusion string | | |

## Claims

1. A method of manufacturing a wind turbine blade component, the method comprising the steps of:
- providing a production line according to any one of claims 4-11;
- pultruding at least one pultruded part using the pultrusion station;
- conveying the at least one pultruded part to the mould;
- loading the at least one pultruded part into the mould; and
- moulding, preferably by a resin infusion process, the wind turbine blade component in the mould at a moulding station of the production line so that the wind turbine blade component comprises the at least one pultruded part.

2. A method according to claim 1 further comprising a step of chamfering one or both end portions of the at least one pultruded part preferably using a chamfering device optionally according to any one of claims 13-15, and, preferably, the step of loading the at least one pultruded part into the mould involves loading the at least one chamfered, pultruded part into the mould.

3. A method according to any one of the previous claims further comprising the steps of:
- finish pultruding a first pultruded part by a first pultrusion system of the pultrusion station;
- chamfering one or both end portions of the first pultruded part;
- finish pultruding a second pultruded part by a second pultrusion system of the pultrusion station subsequent to the first pultruded part; and
- chamfering one or both end portions of the second pultruded part.

4. A production line for manufacturing a wind turbine blade component comprising at least one pultruded part, comprising:
- a pultrusion station comprising at least one pultrusion system each configured for pultruding the at least one pultruded part; and
- a mould for moulding the wind turbine blade component comprising the at least one pultruded part;
wherein the mould is coupled to the pultrusion station so that the mould receives the at least one pultruded part from the at least one pultrusion system.

5. A production line according to claim 4, comprising an intermediate station coupling the pultrusion station and the mould, wherein the intermediate station comprises a receiving portion configured for receiving the at least one pultruded part from the pultrusion station and preferably is configured to convey the at least one pultruded part to the mould, wherein the pultrusion station is configured to output the at least one pultruded part along a longitudinal direction, and wherein the intermediate station is arranged as an extension in the longitudinal direction of the pultrusion station so that, when a pultruded part is manufactured from the at least one pultrusion system, the pultruded part is moved, for example due to gravity, to the receiving portion of the intermediate station.

6. A production line according to any one of claims 4-5, wherein the intermediate station comprises a conveying portion arranged to convey, such as by sliding, a pultruded part at the intermediate station to the mould, and/or wherein the receiving portion comprises a substantially horizontal support surface for supporting the at least one pultruded part and/or the conveying portion comprises a conveying surface angled towards the mould so that a pultruded part on the conveying surface is urged towards the mould due to gravity.

7. A production line according to any one of claims 4-6 comprising a chamfering device, preferably according to claims 13-15, for chamfering one or both end portions of at least one of the pultruded parts pultruded by the pultrusion station, wherein the chamfering device is preferably arranged at the mould and/or at the intermediate station and wherein the chamfering device is preferably movably arranged, such as on at least one or at least two tracks, and able to move along a longitudinal direction with respect to the at least one pultruded part so that the chamfering device can chamfer both end portions of the at least one pultruded part.

8. A production line according to claim 7, wherein the chamfering device comprises a robotic arm and a chamfering tool, such as a grinding tool, a milling tool, a sanding tool, or a cutting tool, mounted on the robotic arm, wherein the robotic arm is configured to, for example via a plurality of actuated joints, move the chamfering tool in the longitudinal, chordwise and thickness directions with respect to the at least one pultruded part.

9. A production line according to any one of claims 7-8, wherein the chamfering device comprises a frame and a chamfering tool, such as a grinding tool, a milling tool, a sanding tool, or a cutting tool, supported by the frame, wherein the chamfering device is configured to move the chamfering tool in two or at least two degrees of freedom with respect to the frame, wherein the frame extends transversely above the mould or above the receiving portion of the intermediate station.

10. A production line according to any one of claims 4-9, wherein the at least one pultruded part has a thickness of more than 5 mm, for example, with increasing preference, at least 6 mm, at least 7 mm, at least 8 mm, at least 9 mm, or at least 10 mm.

11. A production line according to any one of claims 4-10, wherein the wind turbine blade component is a spar cap or a shell part, and the mould is a spar cap mould or a shell part mould, respectively.

12. A factory comprising the production line according to any one of claims 4-11.

13. A chamfering device for chamfering an end portion of a pultruded part, the chamfering device comprising:
- a bed for supporting the end portion of the pultruded part; and
- a chamfering machine comprising a chamfering tool, such as a chamfer drum, configured for chamfering the end portion of the pultruded part along a straight line inclined at a pre-determined chamfer ratio, preferably 1:100, to a pre-determined end step thickness, for example at least 0.1 mm and/or at most 0.3 mm.

14. A chamfering device according to claim 13, wherein the bed of the chamfering device comprises an end stop for engaging an end of the pultruded part, wherein the chamfering device comprises a control device configured for activating the chamfering machine when the end portion of the pultruded part engages the end stop.

15. A chamfering device according to any one of claims 13-14, wherein the chamfering machine comprises a guide rail including a first stop proximal to the end of the pultruded part and a second stop distal from the end of the pultruded part, wherein the chamfering tool is movable along the straight line on the guide rail between stops of the guide rail, wherein the chamfering device comprises a first adjustment means, such as a first threaded member, and/or a second adjustment member, such as a second threaded member, wherein the first adjustment means is configured to adjust the pre-determined chamfer ratio, preferably by, upon being rotated, raising or lowering a distal portion of the guide rail, wherein the second adjustment means, such as a second threaded member, configured to adjust the pre-determined end step thickness distance, preferably by, optionally upon being rotated, raising or lowering a proximal portion of the guide rail, preferably at the end stop of the bed.
